# EUROPEAN PATENT APPLICATION

(11) **EP 2 840 516 A1**
(43) Date of publication of application: **25.02.2015**
(21) Application number: 14180676.0
(22) Date of filing: 12.08.2014
(51) Int. Cl.: G06F 17/30

(54) **Methods and systems for music information management**

(30) Priority: 12.08.2013 US 201313964117
(71) Applicant: HTC Corporation, Taoyuan County 330 (TW)
(72) Inventor: Shih, I-Fen, 231 New Taipei City (TW); Chan, Wen-Chin, 231 New Taipei City (TW); Lin, Chia-Yao, 231 New Taipei City (TW)
(74) Representative: Emde, Eric

(57) **Abstract**

Methods and systems for music information management are provided. When audio data is generated in an electronic device, a control module is notified to launch a specific application to perform a music recognition procedure for the audio data, thus to obtain music information corresponding to the audio data,

## Description

### BACKGROUND OF THE INVENTION

### Field of the Invention

The disclosure relates generally to methods and systems for music information management, and, more particularly to methods and systems that can launch a specific application to perform a music recognition procedure for audio data, thus to obtain corresponding music information.

### Description of the Related Art

Recently, portable devices, such as handheld devices, have become more and more technically advanced and multifunctional. For example, a handheld device may have telecommunications capabilities, e-mail message capabilities, an advanced address book management system, a media playback system, and various other functions. Due to increased convenience and functions of the devices, these devices have become necessities of life.

As described, a handheld device may have a media playback system. In some cases, the handheld device may be equipped with high performance speakers, thereby providing stereophonic experiences of audio for users. Generally, during the playback of music, metadata of the currently played music, such as the title or singer of the music can be displayed in a user interface. It is noted that, the metadata must edited in the music file in advance. If no metadata can be found in the music file, no information can be displayed. Additionally, the content of metadata that can be edited in the music file is limited.

Further, some music services in the handheld device are performed on a network basis, in which audio data is received by or generated in the handheld device in a stream manner. In such cases, no music information can be obtained and displayed.

### BRIEF SUMMARY OF THE INVENTION

Methods and systems for music information management are provided.

In an embodiment of a method for music information management, when audio data is generated in the electronic device, a control module is notified to launch a specific application to perform a music recognition procedure for the audio data, thus to obtain music information corresponding to the audio data.

An embodiment of a system for music information management comprises a storage unit and a processing unit. The storage unit comprises a specific application, wherein the specific application has a music recognition procedure. When audio data is generated in the electronic device, the processing unit notifies a control module to launch the specific application to perform the music recognition procedure for the audio data, thus to obtain music information corresponding to the audio data.

In some embodiments, the music information corresponding to the audio data is further displayed in a user interface during the playback of the audio data.

In some embodiments, the specific application performs the music recognition procedure by analyzing a voice received via a microphone of the electronic device, wherein the voice corresponds to the playback of the audio data by the electronic device.

In some embodiments, the electronic device has a network connection capability, and the music information is downloaded from a network.

In some embodiments, when a remote control function for music services is provided in the electronic device, the control module is further notified to launch the specific application to perform the music recognition procedure when a command is generated by the remote control function. In some embodiments, the remote control function further obtains music information corresponding to the audio data, and provides the music information to the control module for display.

In some embodiments, the control module further periodically launches the specific application to perform the music recognition procedure.

Methods for music information management may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:
Fig. 1 is a schematic diagram illustrating an embodiment of a system for music information management of the invention;
Fig. 2 is a schematic diagram illustrating an embodiment of a storage unit of the invention;
Fig. 3 is a flowchart of an embodiment of a method for music information management of the invention;
Fig. 4 is a flowchart of an embodiment of a performance of a music recognition procedure of the invention;
Fig. 5 is a flowchart of another embodiment of a performance of a music recognition procedure of the invention;
Fig. 6 is a schematic diagram illustrating an example of music information management under the framework of ANDROID system;
Fig. 7 is a flowchart of an embodiment of a timing for launching a specific application to perform a music recognition procedure of the invention; and
Fig. 8 is a flowchart of another embodiment of a timing for launching a specific application to perform a music recognition procedure of the invention.

### DETAILED DESCRIPTION OF THE INVENTION

Methods and systems for music information management are provided.

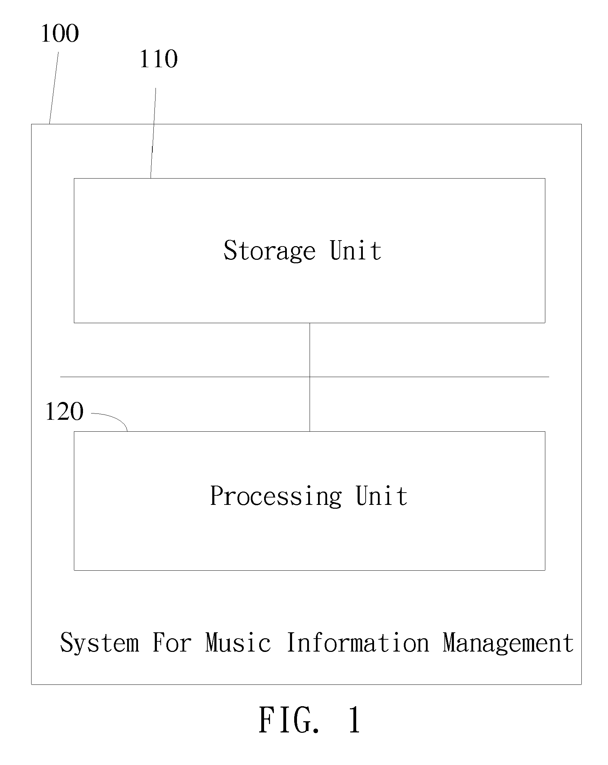

Fig. 1 is a schematic diagram illustrating an embodiment of a system for music information management of the invention. The system for music information management 100 can be used in an electronic device, such as a computer, or a portable device, such as a digital camera, a handheld device such as a mobile phone, a smart phone, a PDA (Personal Digital Assistant), a GPS (Global Positioning System), or any picture-taking device.

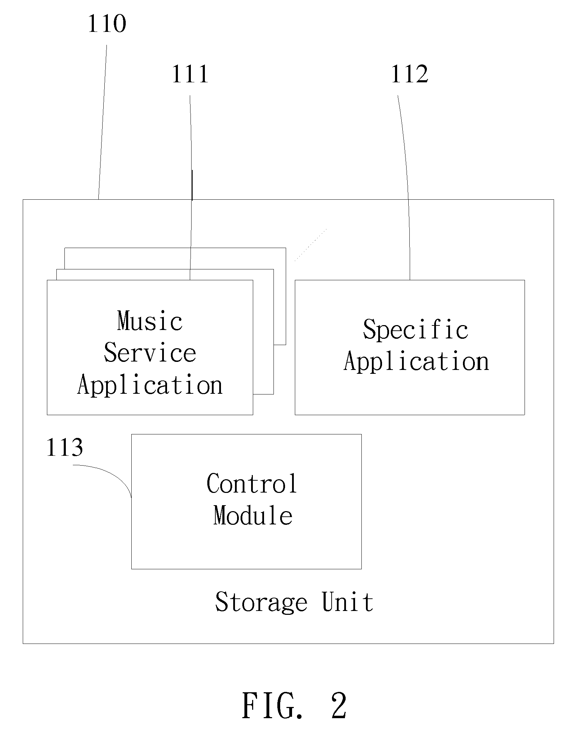

The system for music information management 100 comprises a storage unit 110 and a processing unit 120. As shown in Fig. 2, the storage unit 110 comprises a plurality of music service applications 111, a specific application 112, and a control module 113. The music service application 111 can play audio data located in the electronic device, and/or audio data downloaded from a web server in a stream manner via a network, such as the Internet. In some embodiments, the music service application 111 may be MEDIAPLAYER, SPOTIFY, KKBOX, RDIO, PANDORA, or other. The specific application 112 can perform a music recognition procedure for audio data, such that the specific application 112 can obtain music information corresponding to the audio data. It is understood that, in some embodiments, the audio data may be a part of music, which may be generated for the music service application 111. It is understood that, the specific application 112 can perform various methods to recognize the audio data, and the present invention is not limited to any music recognition method. Further, the music information corresponding to audio data may be various. For example, the music information may be a title of the music or an album corresponding to the audio data, lyrics of the music corresponding to the audio data, a singer name of the music corresponding to the audio data, background information of a singer of the music corresponding to the audio data, the albums which have been published by the singer of the music corresponding to the audio data, and others. It is understood that, in some embodiments, the system for music information management 100 or the electronic device may have a network connection capability, and the music information is downloaded from a network, such as the Internet. It is understood that, in some embodiments, the system for music information management 100 can comprise a display unit (not shown in Fig. 1). The display unit can display related figures and interfaces, and related data, such as the obtained music information. It is understood that, in some embodiments, the display unit may be a screen integrated with a touch-sensitive device (not shown). The touch-sensitive device has a touch-sensitive surface comprising sensors in at least one dimension to detect contact and movement of an input tool, such as a stylus or finger on the touch-sensitive surface. That is, users can directly input related data via the display unit. The processing unit 120 can control related components of the system for music information management 100, and perform the methods for music information management, which will be discussed further in the following paragraphs.

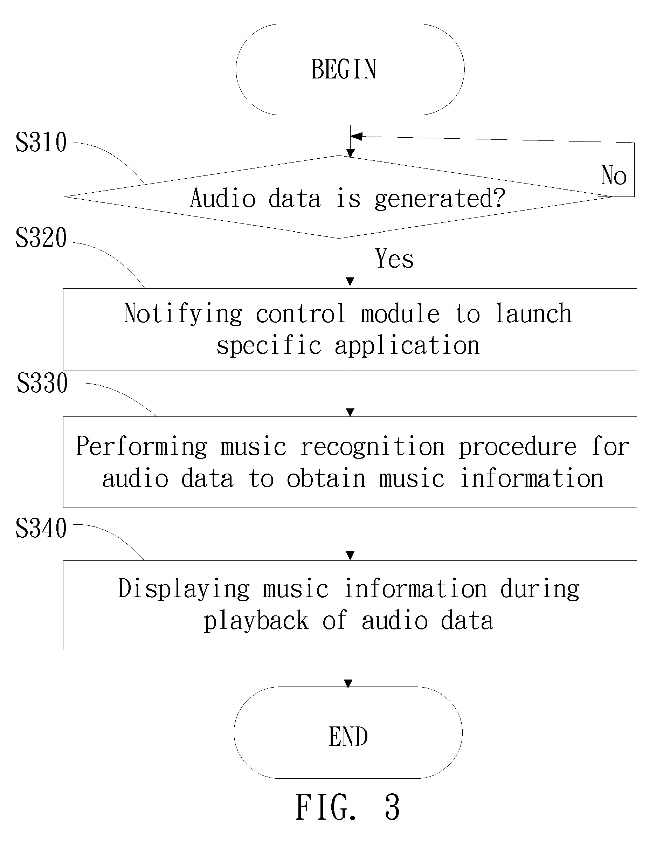

Fig. 3 is a flowchart of an embodiment of a method for music information management of the invention. The method for music information management can be used in an electronic device, such as a computer, or a portable device, such as a digital camera, a handheld device such as a mobile phone, a smart phone, a PDA, a GPS, or any picture-taking device.

In step S310, it is determined whether audio data is generated in the electronic device. It is understood that, in some embodiments, the audio data can be generated for at least one music service application. In some embodiments, when the electronic device is implemented with an ANDROID system, the audio data is passed through a software module of AudioTrack in the framework of the ANDROID system, and related details are discussed later. If no audio data is generated (No in step S310), the procedure remains at step S310. If audio data is generated in the electronic device (Yes in step S310), in step S320, a control module is notified to launch a specific application, and in step S330, the specific application performs a music recognition procedure for the audio data, thus to obtain music information corresponding to the audio data. It is understood that, in some embodiments, the specific application can perform various methods to recognize the audio data, and the present invention is not limited to any music recognition method. Further, the music information corresponding to audio data may be various. For example, the music information may be a title of the music or an album corresponding to the audio data, lyrics of the music corresponding to the audio data, a singer name of the music corresponding to the audio data, background information of a singer of the music corresponding to the audio data, the albums which have been published by the singer of the music corresponding to the audio data, and others. It is understood that, in some embodiments, the music information can be downloaded from a network, such as the Internet. It is noted that, after the audio data is generated, the audio data can be played by the electronic device. During the playback of the audio data, in step S340, the music information corresponding to the audio data is displayed in a user interface.

It is noted that, the performance of the music recognition procedure may be various according to different applications and requirements.

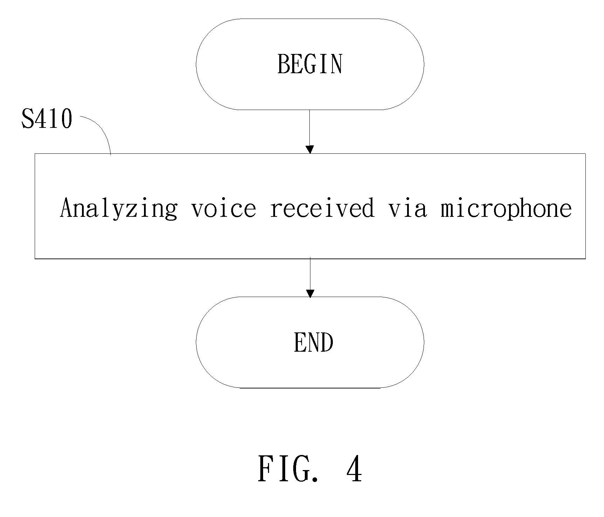

Fig. 4 is a flowchart of an embodiment of a performance of a music recognition procedure of the invention. In step S410, the specific application performs the music recognition procedure by analyzing a voice received via a microphone of the electronic device, wherein the voice corresponds to the playback of the audio data by the electronic device.

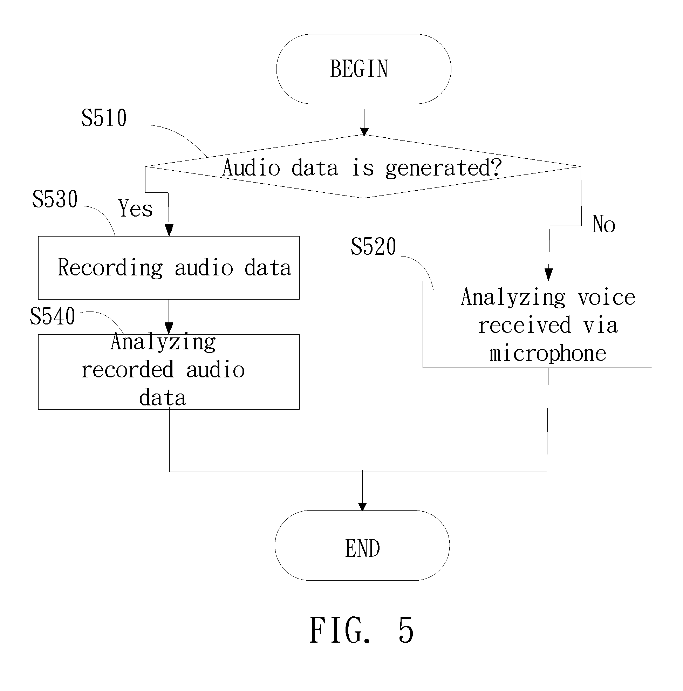

Fig. 5 is a flowchart of another embodiment of a performance of a music recognition procedure of the invention. In step S510, it is determined whether an earphone is plugged into the electronic device. If no earphone is plugged into the electronic device (No in step S510), in step S520, the specific application performs the music recognition procedure by analyzing a voice received via a microphone of the electronic device, wherein the voice corresponds to the playback of the audio data by the electronic device. If an earphone is plugged into the electronic device (Yes in step S510), in step S530, the control module records the audio data, and in step S540, the specific application performs the music recognition procedure by analyzing the recorded audio data.

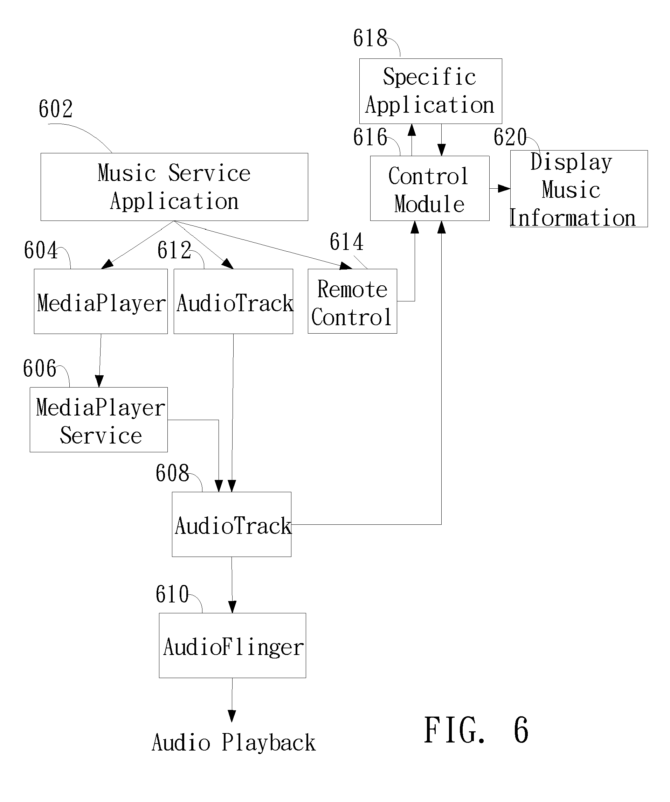

As described, when the electronic device is implemented with an ANDROID system, the audio data is passed throug a software module of AudioTrack in the framework of the ANDROID system. Fig. 6 is a schematic diagram illustrating an example of music information management under the framework of ANDROID system. As shown in Fig. 6, in the framework of ANDROID system, a music service application 602 may be implemented using an MediaPlayer 604 or an AudioTrack 612 in Java, in which the MediaPlayer 604 communicates with an AudioTrack 608 in CPP by way of an MediaPlayer Service 606, and the AudioTrack 612 in Java communicates with an AudioTrack 608 in CPP. An AudioFlinger 610 obtains the audio data generated by the AudioTrack 608 in the FIFO, and plays the audio data. It is noted that, a link is established between the AudioTrack 608 and the control module 616, such that the control module 616 can be notified when audio data is generated by the AudioTrack 608. Further, when a RemoteControl function 614 is provided for the music service application, a link is established between the RemoteControl function 614 and the control module 616, such that the control module 616 can be notified when a command is generated by the RemoteControl function 614. The control module 616 is notified to launch a specific application 618 to perform the music recognition procedure for audio data, thus to obtain the corresponding music information. Also, the RemoteControl function 614 further obtains music information corresponding to the audio data, and provides the music information to the control module 616 for display. The control module 616 displays the obtained music information 620.

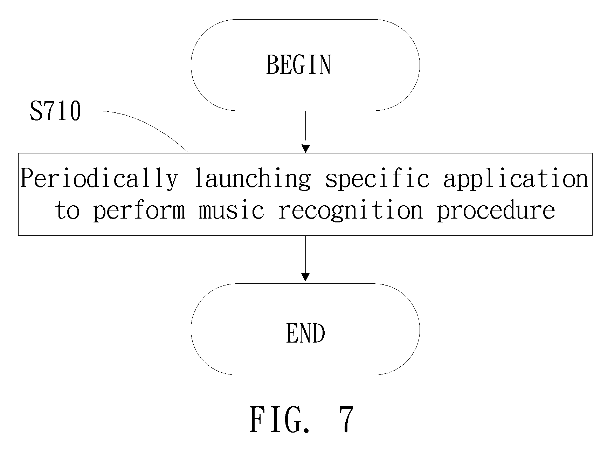

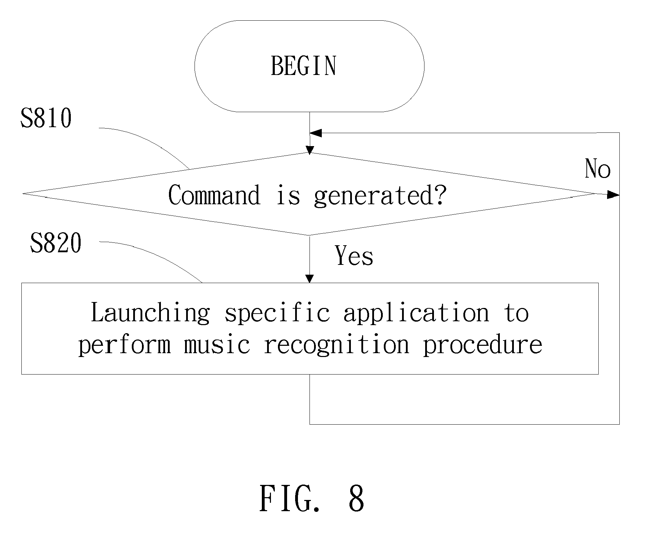

After the specific application is triggered to perform the music recognition procedure, the music recognition procedure is further re-performed at different timings. Fig. 7 is a flowchart of an embodiment of a timing for launching a specific application to perform a music recognition procedure of the invention. In step S710, the control module periodically launches the specific application to perform the music recognition procedure. Fig. 8 is a flowchart of another embodiment of a timing for launching a specific application to perform a music recognition procedure of the invention. In the embodiment, a remote control function is provided in the electronic device. In step S810, it is determined whether a command is generated by the remote control function. If no command is generated by the remote control function (No in step S810), the procedure remains at step S810. If a command is generated by the remote control function (Yes in step S810), in step S820, the control module launches the specific application to perform the music recognition procedure for audio data. Then, the procedure returns to step S810.

Therefore, the methods and systems for music information management of the present invention can launch a specific application to perform a music recognition procedure for audio data of any music service application in the electronic device, thus to obtain and display corresponding music information during the playback of the audio data.

Methods for music information management, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. A method for music information management for use in an electronic device, comprising:
when audio data is generated in the electronic device, notifying a control module to launch a specific application to perform a music recognition procedure for the audio data, thus to obtain music information corresponding to the audio data.

2. The method of claim 1, further comprising displaying the music information corresponding to the audio data in a user interface during the playback of the audio data.

3. The method of claim 1, wherein the specific application performs the music recognition procedure by analyzing a voice received via a microphone of the electronic device, wherein the voice corresponds to the playback of the audio data by the electronic device.

4. The method of claim 1, wherein the music information comprises a title of the music or an album corresponding to the audio data, lyrics of the music corresponding to the audio data, a singer name of the music corresponding to the audio data, or background information of a singer of the music corresponding to the audio data.

5. The method of claim 4, wherein the electronic device has a network connection capability, and the music information is downloaded from a network.

6. The method of claim 1, wherein the audio data is generated for at least one music service application.

7. The method of claim 1, wherein when a remote control function for music services is provided in the electronic device, the method further comprises a step of notifying the control module to launch the specific application to perform the music recognition procedure when a command is generated by the remote control function.

8. The method of claim 1, wherein when a remote control function for music services is provided in the electronic device, the method further comprises steps of obtaining music information corresponding to the audio data by the remote control function, and providing the music information to the control module for display by the remote control function.

9. The method of claim 1, further comprising periodically launching the specific application to perform the music recognition procedure by the control module.

10. A system for music information management for use in an electronic device, comprising:
a storage unit comprising a specific application; and
a processing unit, when audio data is generated in the electronic device, notifying a control module to launch the specific application to perform a music recognition procedure for the audio data, thus to obtain music information corresponding to the audio data.

11. The system of claim 10, further comprising a display unit for displaying the music information corresponding to the audio data in a user interface during the playback of the audio data.

12. The system of claim 10, wherein the specific application performs the music recognition procedure by analyzing a voice received via a microphone of the electronic device, wherein the voice corresponds to the playback of the audio data by the electronic device.

13. The system of claim 10, wherein the music information comprises a title of the music or an album corresponding to the audio data, lyrics of the music corresponding to the audio data, a singer name of the music corresponding to the audio data, or background information of a singer of the music corresponding to the audio data.

14. The system of claim 13, wherein the electronic device has a network connection capability, and the music information is downloaded from a network.

15. The system of claim 10, wherein the audio data is generated for at least one music service application.

16. The system of claim 10, wherein when a remote control function for music services is provided in the electronic device, the method further comprises a step of notifying the control module to launch the specific application to perform the music recognition procedure when a command is generated by the remote control function.

17. The system of claim 10, wherein when a remote control function for music services is provided in the electronic device, the remote control function further obtains music information corresponding to the audio data, and provides the music information to the control module for display.

18. The system of claim 10, further comprising periodically launching the specific application to perform the music recognition procedure by the control module.
